# EUROPEAN PATENT SPECIFICATION

(11) **EP 1 650 279 B1**
(45) Date of publication and mention of the grant of the patent: **27.05.2009**
(21) Application number: 04105152.5
(22) Date of filing: 19.10.2004
(51) Int. Cl.: C09J 7/04, F16F 9/30

(54) **Adhesive article having core/sheath structure**
Klebeartikel mit Kern/Mantelstruktur
Article adhésif de type âme/gaine

(43) Date of publication of application: 26.04.2006
(73) Proprietor: 3M Innovative Properties Company, St. Paul MN 55144-1000 (US)
(72) Inventor: Swan, Mike, c/o 3M Europe s.a., 1831, Diegem (BE); Sikkel, Bernard, c/o 3M Europe s.a., 1831, Diegem (BE)
(74) Representative: Voortmans, Gilbert J.L.

(56) References cited:
- EP-A- 0 995 782
- WO-A-99/50943
- DE-A1- 10 113 425
- US-A- 4 890 829

## Description

The present invention relates to an adhesive article as defined in claim 1. Such adhesive articles can be designed for distributing and transferring stress within and between substrates to which they are bonded and/or can provide good gap filling properties. Thus, the adhesive articles are particularly useful in bonding or stiffening components e.g. in motor vehicles.

Adhesives and sealers used in automotive production are classified as structural, semi-structural and non-structural, depending on their bond strength and elasticity. They are usually homogeneous pastes, liquids or tapes of different gap fill capacity, tensile strength and modulus, which build up strength by a number of different chemistries. There is increasing demand for structural and semi structural adhesives in automotive applications. This is because joining with adhesives turns out to be of lower cost and more efficient than welding or methods of mechanical fastening. Adhesive bonding is essential for aluminium in vehicles and also for composite or other hybrid constructions.

Structural and semi-structural adhesives are often used to provide additional stiffness, fatigue and impact performance to body components and may be used in bonding stiffeners such as striker pin reinforcements; door handle reinforcements and other types of reinforcement brackets in vehicles where higher strength, stiffness or fatigue properties are required than may be available from other methods of joining such as welding, brazing or riveting for the same substrate thickness.

Tape adhesives have been used for many years, but there are a number of limitations to their use. First of all, it is difficult to apply a flat tape to a curve which lies in the plane of the tape due to the difficulty of accommodating compression and elongation in the same plane. Therefore, curved structures often need to be fitted with a sequence of straight tape stripes gradually varying in their orientation on the surface to which they are applied.

Moreover, it is difficult to provide a tape which has good gap fill properties. Adhesives used in the automotive industry should be able to absorb tolerance variations between components during the joining process and to allow movement, such as differential expansion, during oven cycles. Often, joint gaps can vary in size by as much as 2 or 3 mm, and to bridge such a gap without reduction in performance or fluttering of the bonded parts, large quantities of liquid or paste type adhesive are often required. In order to limit the cost of the adhesive which is used for gap filling, the respective adhesives are often highly filled. This leads to less than optimised weight and reduced vehicle efficiency. Environmentally less desirable polymer bases like PVC are also frequently used to minimise costs.

To provide gap-filling properties, expanding adhesives have been developed, which incorporate micro-balloons or blowing agents which are heat activated, e.g. during a bake cycle. The problem with this approach is that the multidirectional and uneven expansion of such adhesives is difficult to control. Thus, it is frequently difficult to determine how much adhesive needs to be applied and how the final orientation of the adhesive in the vehicle is going to affect expansion. In addition, the performance of the adhesive, such as its strength or its attachment to a substrate, may be impaired because of its foam construction. Foaming adhesives are often applied as castings or extrusions, kept in place by expensive clips or secondary adhesives and fastenings.

Apart from disadvantages arising with respect to their handling, expanding adhesives which possess acceptable gap filling properties may not always have sufficient bond strength to the substrates to which they are applied. Finally, particularly in automotive applications, adhesives may need to be compatible with oily surfaces as substrates to avoid the need for a pre-treatment of such surfaces.

A further problem with application of large masses of bulk adhesive in contact with closure panel skins as they are used e.g. in automotive industry is the contraction of the adhesive during curing/polymerisation. As a result, the outline of the adhesive may be discernible as a ghost on the outer skin. Very small contractions can be visible, and the read-through affects vehicle appearance and perceived value.

Particularly for applications in the automotive industry, it is thus desirable to provide an adhesive system which has the capability of filling variable gaps while retaining optimum physical properties of the cured/polymerised adhesive system. Moreover, the adhesive system should be convenient to handle and to apply, and it should have a high bond strength to a variety of surfaces as substrates, such as lubricated surfaces, without requiring their pre-treatment, such as a cleaning or a coating of the surfaces. Finally, the cured adhesive should be compatible with a number of chemical treatments to which the bonded product may be subjected, such as a phosphate wash carried out during paint line processing.

Adhesive tapes which are reinforced by fiber webs are disclosed in US 2002/0182955 A1, which relates to a structural bonding tape combining an adhesive material and a fiber web, in DE 199 31 241 A1, which relates to an adhesive film for structural bonding and in JP-A- 10-245534, which relates to a reinforced pressure sensitive adhesive tape.

The present invention addresses some of the difficulties and problems discussed above by providing an elongated adhesive article as defined in claim 1.

One advantage of the above system may be the combination of the compressibility of the fibrous material comprised by the core which can be used to occupy variable volumes with the bond strength achieved by the adhesive composition comprised in the sheath. Use of a compressible material instead of a liquid, foamable material or a paste may facilitate the handling and the application of the adhesive article to various geometries. Moreover, the compressible article may disperse stress and/or dampen vibrations. Via selection of different types of adhesives and core materials, adhesive articles can be designed which are suitable to cover a wide variety of applications.

Thus, in a first aspect, the invention relates to bonding and efficiently filling a gap between two or more substrates by means of an elongated adhesive article according to the invention. The adhesive article can be designed to stay in place by compression in a joint or simply by the level of tack initially achieved. Application of such an article by hand is fast and convenient.

The adhesive article provides compressibility, so that the adhesive sheath can bond to complex profiles without the need for an expanding adhesive. Moreover, if the sheath comprises an activatable adhesive composition which may cure/polymerise or otherwise create a bond upon activation, the rigidity of the resulting adhesive bond will lead to a reduction or a loss of the initial compressibility and thus to bonded structures of significant strength.

Furthermore, the core comprises an initially compressible non-woven fibrous web that has the capability of stiffening and/or crosslinking after the adhesive article has been fitted between substrates to be bonded. Thus, the compressive strength and the shear strength of the cured adhesive article as well as its dampening properties may be optimised.

The resulting joint construction may provide anti flutter and gap filling properties and enhanced energy transfer between substrates by distributing the load across the complete surface of the bond between the substrates and minimizing stress concentrations typically found at edges of joints made with structural or semi-structural adhesive tapes. A further feature of the adhesive article is the ability to fill variable gaps between substrates. Particularly reversibly compressible adhesive articles tolerate movements of the substrate to which they are bonded, such as differential expansion during oven cycles. Further properties may include the ability to occupy variable volumes while providing no squeeze-out of a liquid or paste filling system. In addition, the adhesive article according to the invention may offer sound and vibration insulation.

An additional application for the technology of the present invention is the manufacture of light-weight stiffening or dampening structures obtainable by forming an array of the adhesive articles according to the invention on a substrate or between two or more substrates.
- Fig. 1: gives a schematic view of an adhesive article according to the invention which is applied between two substrates
- Fig. 2: gives a schematic view of a vertical cross lapped fibrous web for use as a core material in the present invention.
- Fig. 3: is a photograph illustrating one embodiment of the adhesive article according to the invention.
- Fig. 4: is a photograph showing the adhesive article of Fig. 3 positioned between two substrates to be bonded.
- Fig. 5: is a photograph showing the adhesive article of Fig. 3 positioned between two profiled substrates to be bonded.
- Fig. 6: is a photograph illustrating a further embodiment of the adhesive article according to the invention.

The adhesive article of the present invention has an elongated form due to the presence of an elongated core on which a sheath is provided. Generally, the article has an aspect ratio, defined as the length to width ratio, with the length being the longitudinal axis and the width the largest dimension of the cross-section, of at least 2, such as 4 or more or 6 or more. In a particular embodiment, the adhesive article has an aspect ratio of at least 10, such as 20 or more.

Examples for the shape of the cross-section of the adhesive article perpendicular to its longitudinal axis are a circular shape, a polygonal shape such as a square, rectangle or a hexagon, or an elliptical shape. Often, the adhesive article takes the form of a cylinder or a polygonal column, with the cylindrical shape being particularly preferred. If a core material is used which has an unfilled portion in its centre, tubular structures may also be obtained. As a rule, the adhesive article is applied to a substrate with its longitudinal axis being parallel to the surface of the substrate.

In order to ensure sufficient gap filling, the smallest diameter of the core, which is generally perpendicular to the longitudinal axis, should be 6 mm or more. Depending on the application of the adhesive article, cores with a smallest diameter perpendicular to the longitudinal axis of 10 mm or more, such as 20 mm or more are suitable. For most purposes, cylindrical shapes of the adhesive article with a diameter of the core of 2 to 30 mm may be used.

The length of the adhesive article is not particularly restricted, and it may be provided in a length of several meters, from which pieces of suitable length can be cut off upon use. To ensure convenient handling, the adhesive article could, for example, be produced in pre-cut pieces with a length varying from 5 cm to 100 cm, which could also be further cut to shorter lengths if needed.

The adhesive article according to the invention is compressible in at least one direction perpendicular to the longitudinal axis of the elongated adhesive article.

The adhesive articles according to the invention is reversibly compressed showing recoverable deformation of at least 30 % along the thickness direction of the non-woven fibrous web. In the context of the present invention, an adhesive article is considered to be reversibly compressible if, after removal of the load which is required to induce a reduction of the thickness of the article by the given percentage, the article returns to at least 90 % of its original thickness.

Generally, the adhesive article should be compressible in any direction perpendicular to the longitudinal axis so that no specific orientation must be chosen when applying the adhesive article to a substrate. However, it may be desirable for specific applications to use an adhesive article with anisotropic compressibility in different directions perpendicular to its longitudinal axis, which can then be applied to the substrate in one or more preferred orientations.

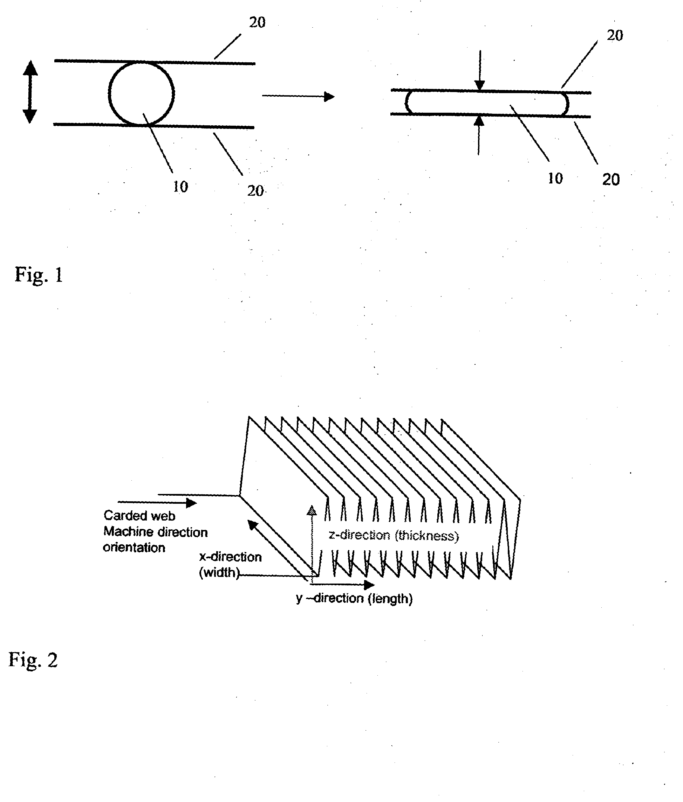

When the adhesive article is compressed in one or more directions perpendicular to its longitudinal axis, dimensional changes in other directions are acceptable and may even be desirable to increase the bond surface, as illustrated in Fig. 1. Fig. 1 shows an adhesive article according to the invention (10) having a circular cross-section in uncompressed form which is positioned between two substrates (20). When pressure is applied perpendicular to the planes of the substrates (20) to achieve bonding, the adhesive article is compressed in response to the pressure while its surface area in contact with the substrates increases.

Preferably, the adhesive article and its core are reversibly compressible in at least one or any direction perpendicular to the longitudinal axis by at least 30 %, such as 50 % or more, still preferably by at least 70 % or more or even 95 % or more. In the context of the present invention, an adhesive article is considered to be reversibly compressible if, after removal of the load used to determine the compressibility, the article returns to at least 90 % of its original dimension. Thus, the core may act as a spring providing pressure to the adhesive in the sheath which is in contact with the substrates to be bonded.

Furthermore, it is preferred that the adhesive article and its core are flexible along the longitudinal axis, i.e. it should be possible to bend the adhesive article along its longitudinal axis. Thus, the adhesive article can be conveniently applied to a substrate in a variety of geometries, such as curves or corners.

A variety of fibrous webs can be used for the core in the context of the present invention, and examples include non-woven fibrous webs. Cores comprising a fibrous web are suitable for the purpose of the present invention, since they allow the properties of the adhesive article to be adapted to a wide variety of applications. Thus, by varying the density of the web or the orientation of the fibers contained therein, the compressibility of the web and its flexibility along the longitudinal axis can be influenced. Moreover, by choosing suitable fibers and/or additives, the properties of the web can be changed even after the adhesive article has been applied to a substrate.

Fiber properties could include flame retardant, antistatic, conductive, surface conductive, strain hardening, heat shrink, impact resistant, high or low temperature resistant, high or low tensile strength, depending on application requirements. Fiber appearance can also be optimized to provide an interesting appearance by changing of colour or by provision of reflective properties which could be used to optimize product appeal in packaging or to provide a particular identity or code for customers to understand better product use for particular applications. Fibers could also be designed to change colour dependant on strain or environmental exposure or temperature exposure in order to determine the likely exposure history or progressive damage of an article on which the invention has been used

Fibers can also be designed to be degradable (biologically, thermally or by exposure to other specific or general materials or mixtures) to enable improved recycling or dismantling characteristics of an article on which the invention has been used. Depending on the application, it may, for example, be desirable to remove the core from the adhesive article after it has been applied to at least one substrate.

Generally, the fibrous web has a basis weight ranging from 10 g/m² to 1 kg/m² or to 500 g/m². Preferred are weights of 50 g/m² or above, such as 70 g/m² or above or 80 g/m² or above. Particularly preferred are values of more than 100 g/m², such as 120 g/m² or above or 300 g/m² or above.

The type of fibers to be used in the fibrous web may be selected according to the respective application. Typical examples are polyolefin fibers such as polyethylene, or polypropylene, polystyrene fibers, polyether fibers, polyester fibers such as polyethylene terephthalate (PET) or polybutaline terephthalate (PBT), vinyl polymer fibers such as polyvinyl chloride and polyvinylidene fluoride, polyamides such as polycaprolactame, polyurethanes, nylon fibers, polyaramide fibers (such as Kevlar® fibers). Alternatively or in addition, the fibrous web may contain metal fibers, metal coated polymeric fibers, polymeric fibers coated with other conductive materials or carbon fibers. Preferred examples are PET fibers and polyaramide fibers. Also, blends of two or more of the above types of fibers may be used to provide fibrous webs in the adhesive article of the invention.

Generally, the fibers of the fibrous web have a diameter of at least 1 denier (den). Preferred are values greater than 5 den, such as 10 den or above or 15 den or above. Preferably, the fibers should have a diameter of not more than 100 den, such as 50 den or less.

Preferably, the fibers defined above are present in a fibrous web as staple fibers. In addition, the web may contain thermal bond fibers which are used to give further strength to the fibrous web. Such thermal bond fibers are known in the art, and typical examples of such fibers are bicomponent fibers (also known as Bico fibers). Generally, these thermal bond fibers have a fiber diameter typically in the range of 1 to 20 den. The proportion of staple fibers to thermal bond fibers can be in the range of 5 to 95%, more typically in the range of 10 to 50%, for example around 30%.

Fibrous webs which have the desired fiber structure may be obtained by methods known in the art, such as carding and cross-lapping (CCL) or by Rando-webbing.
In the carding and cross-lapping process, pre-opened fibers are fed into a card, which opens the fibers by combing them between roles. The fibers are then laid down onto a belt; fibers form a lengthwise oriented pre-web. The web is then passed through a cross-lapper and the one-dimensional, machine direction oriented, pre-web is layered to give a controlled thickness and weight. This process arranges the fibers partially in the cross web direction. The web is then normally passed through a thermal bond oven to heat bond the fibres together and give the CCL web integrity. The Rando Webber is a commercial piece of processing equipment that is commonly used to process short fibers into nonwoven webs. Pre-opened and blended fibers are fed into the feed section of the Rando. The unit then typically will further tumble the fibers as it selectively feeds the Lickerin, from which the fibers are then blown onto a vacuum collection surface and are conveyed away from the machine for post web processing (thermal bonding).

Fibrous webs which are also suitable as core materials in the present invention can be obtained by a technique known as vertical lapping or vertical cross lapping (VCL). Vertical cross lapping yields a corrugated fibrous web by vertically folding a carded fibrous web. Fig. 2 provides a schematic view of such a vertically cross lapped fibrous web. This figure also demonstrates that the fibers which are initially oriented in the y-direction in the carded web used as a starting product in the VCL process, are oriented towards the z-direction (or the thickness direction) of the fibrous web resulting from the process. Thermal bond fibers help to stabilize the corrugated structure of the vertically cross lapped web. These thermal bond fibers are typically activated after the lapping process, e.g. by passing the web through a thermal bond oven. Suitable techniques of vertical cross lapping are established on the art, and the equipment often used to obtain a VCL web is available under the tradename "Struto" or "Wavemaker". Such techniques are also disclosed in US 6,602,581 and literature cited therein. If the core of the adhesive article comprises such a vertically cross lapped web as schematically illustrated in Fig. 2, the y-axis of the web should be oriented in the longitudinal axis of the core. Thus, an adhesive article can be obtained which shows a highly reversible compressibility perpendicular to its longitudinal axis and can be easily bent along this longitudinal axis.

By using cores comprising a fibrous web, the adhesive article of the present invention can be specifically designed to turn from an initially soft, compressible state to a more stiff or rigid state which provides a high degree of strength, impact and compression resistance after its application to the desired position.

Such a stiffening of the fibrous web can be achieved by a variety of methods. For example, the fibrous web may comprise a composition that, upon activation to heat, actinic radiation or electron beam irradiation, causes fixation of the fibers to another or fixation of the fibers in a matrix so as to cause reduced compressibility of the fibrous web or a loss of compressibility. The composition may be included into the web for example in the form of a powder, or in the form of fibers such as thermal bond fibers.

In one embodiment, the fibrous web can be loaded with a powder of a thermosettable or thermoplastic composition which, upon activation bond the fiber structure together or flow into each other to form a continuous stable matrix around the fibers. Suitable compositions are those referred to below in the context of the activatable adhesive composition. Generally, it is sufficient to use these materials in an amount of 5 weight % or more , based on the weight of the unloaded fibrous web.

In one embodiment, thermal bond fibers, such as those defined above may also be used to increase the stiffness of the fibrous web after the adhesive article of the invention has been applied to a substrate. If desired, thermal bond fibers having different melting points may be included into the fibrous web. Thus, one type of thermal bond fibers (Low melting temperature) may serve for stabilizing the web after vertical lapping, and another type (High melting temperature) for further stiffening the web at the site of use of the adhesive article.

In the adhesive article according to the invention, the core is provided with a sheath comprising an activatable adhesive composition. The sheath may form a separate layer which is in contact with the surface of the core, or the core may be partially embedded in the material constituting the sheath. On the other hand, the core should generally not be fully impregnated with the material of the sheath, so as to maintain its compressibility. Typically, the sheath extends into the core by not more than 50 % or 30 % of the diameter of the core in perpendicular direction to its longitudinal axis, preferably not more than 20 % or 10 %, and particularly preferably or not more than 2 %.

As a rule, the sheath has a thickness of 0.05 mm to 0.5 mm, preferably 0.1 mm to 0.3 mm.

Examples for the adhesive composition comprised in the sheath are an activatable adhesive composition optionally in combination with a pressure sensitive adhesive composition. Often, these adhesive compositions have a sufficient flexibility in the non-activated state so as not to interfere with the compressibility and/or flexibility of the core when the adhesive article is applied.

One possible joining process using the adhesive article of the invention would consist of application of the adhesive article to one surface and then bringing a second surface in contact with it while compressing the joint to the correct height. It is generally desirable but not essential for the activatable adhesive to have initial tack to the bonding surface in order to enable components to achieve good initial positioning or handling strength. It is also possible to apply the adhesive article to a single surface, e.g. for stiffening or other reasons. In this case it would be desirable but not essential for the activatable adhesive to have a level of tack to enable easy positioning without slippage. There are alternative applications where tack may not be preferred in the activatable adhesive, such as in applications where a certain amount of slippage may be required. It is also possible to provide adhesive articles in which the activatable adhesive used in the sheath would have only one tacky surface or for specific areas of tack to be used intermittently in the otherwise non-tacky but activatable adhesive.

The adhesive article of the present invention may be provided with both initial adhesive properties and a high bond strength by including into the sheath an activatable adhesive in combination with a pressure sensitive adhesive. For example, the activatable adhesive composition and the pressure sensitive adhesive may be present in the sheath in the form of a multitude of separate domains, each of said domains defining a part of the surface of the adhesive layer. Alternatively, the pressure sensitive adhesive composition may form a thin layer on the activatable adhesive composition, as disclosed in US 5,593,759, or the pressure sensitive and the activatable adhesive composition may be distributed in the sheath as disclosed in US 5,585,178.

The term 'activatable adhesive composition', as it is used in the context of the present invention, refers to an adhesive composition that requires activation to form a bond, in particular a permanent bond. By 'activation' is meant that the adhesive composition is exposed to heat or is irradiated with, for example UV, visible light or e-beam to cause the bond to form. Generally, a structural bond should be formed that has a shear strength of at least 2 MPa, preferably at least 6.9MPa, more preferably at least 15MPa measured according to ASTM D-1002-94. The structural bond preferably has a T peel strength of at least 50N/25mm, more preferably at least 100N/25mm when tested according to the methods outlined under ASTM D1876. The activatable adhesive composition may or may not have pressure sensitive adhesive properties, and, when present, these may not be retained through a typical activation cycle used in forming a permanent or structural bond. Exemplary activatable adhesive composition having pressure sensitive properties which may also be used for the adhesive article of the present invention are disclosed in US 5,086,088 and in WO 92/20754.

Upon activation, the activatable adhesive composition may cross-link or cure, i.e. a so-called thermosetting adhesive, or the adhesive composition may melt, thereby wetting out the surface and forming a bond upon cooling. Still further, the activatable adhesive composition may be comprised of a so-called hybrid material as defined below.

The term "thermosetting" as used herein refers to a material, which undergoes a curing reaction that results in a chemical change upon bonding and an increase in the hardness of the material. The term "thermoset" as used herein refers to a thermosetting material, which has been cured. A thermosetting material may generally be bonded by application of heat, actinic radiation such as UV, visible, or infrared, or microwave or X-ray energy.

The term "thermoplastic" as used herein refers to a material which undergoes a physical change upon the application of heat, i.e., the material flows upon bonding and returns to its initial non-flowing state upon cooling. A thermoplastic material is typically bonded by application of heat.

The term "hybrid material" refers to a material which is a combination of at least two components, wherein the at least two components are compatible in the melt phase (the melt phase is where the combination of the at least two components is a liquid), the at least two components form an interpenetrating polymer network or semi-interpenetrating polymer network, and at least one component becomes infusible (i.e., the component cannot be dissolved or melted) after application of heat or by other means of curing such as application of light. A hybrid material will be described in more detail below. A hybrid material may generally be bonded by application of heat, actinic radiation such as UV, visible, or infrared, or microwave or X-ray energy.

A hybrid material is, for the purpose of the present invention, mutually exclusive of the classes of thermosetting and thermoplastic materials defined herein. In other words, thermosetting materials and any optional additives or thermoplastic materials and any optional additives will be considered non-hybrid materials if they do not meet the definition of hybrid material as defined herein.

Exemplary activatable compositions for use in the present invention are those referred to as adhesive material in US 2002/0182955 A1, the curable compositions of US 6,057,382 or those listed in the following

Suitable thermosetting materials include epoxides, urethanes, cyanate esters, bismaleimides, phenolics, including nitrile phenolics, and any combinations thereof.

Suitable epoxides include those containing at least two 1,2-cyclic ethers. Such compounds can be saturated or unsaturated, aliphatic, aromatic or heterocyclic, or can comprise combinations thereof. Suitable epoxides may be solid or liquid at room temperature.

Compounds containing at least two epoxide groups (i.e., polyepoxides) are preferred. A combination of epoxide compounds may be employed, and an epoxide having a functionality of less than two may be used in a combination so long as the overall epoxide functionality of the mixture is at least two. The polymeric epoxides include linear polymers having terminal epoxy groups (e.g., a diglycidyl ether of a polyoxyalkylene glycol), polymers having skeletal oxirane units (e.g., polybutadiene polyepoxide), and polymers having pendent epoxy groups (e.g., a glycidyl methacrylate polymer or copolymer). It is also within the scope of this invention to use a material with functionality in addition to epoxide functionality but which is essentially unreactive with the epoxide functionality, for example, a material containing both epoxide and acrylic functionality.

A wide variety of commercial epoxides are available and listed in "Handbook of Epoxy Resins" by Lee and Neville, McGraw Hill Book Company, New York (1967) and in "Epoxy Resin Technology" by P. F. Bruins, John Wiley & Sons, New York (1968), and in "Epoxy Resins: Chemistry and Technology, 2nd Edition" by C. A. May, Ed., Marcel Dekker, Inc. New York (1988). Aromatic polyepoxides (i.e., compounds containing at least one aromatic ring structure, e.g., a benzene ring, and at least two epoxide groups) that can be used in the present invention include the polyglycidyl ethers of polyhydric phenols, such as Bisphenol A- or Bisphenol-F type resins and their derivatives, aromatic polyglycidyl amines (e.g., polyglycidyl amines of benzenamines, benzene diamines, naphthylenamines, or naphthylene diamines), polyglycidyl ethers of phenol formaldehyde resole or novolak resins; resorcinol diglycidyl ether; polyglycidyl derivatives of fluorene-type resins; and glycidyl esters of aromatic carboxylic acids, e.g., phthalic acid diglycidyl ester, isophthalic acid diglycidyl ester, trimellitic acid triglycidyl ester, and pyromellitic acid tetraglycidyl ester, and mixtures thereof. Preferred aromatic polyepoxides are the polyglycidyl ethers of polyhydric phenols, such as the series of diglycidyl ethers of Bisphenol-A commercially available from Shell Chemical Inc., Houston, Tex., for example, under the trade designations "EPON 828" and "EPON 1001 F" and the series of diglycidyl ethers of Bisphenol-A and Bisphenol F and their blends commercially available from Shell Chemical Inc., for example, under the trade designations "Epikote 232" and "Epikote 1001" available from Shell Chemical Inc., Pemis, The Netherlands. Other useful commercially available aromatic epoxides include the "DER" series of Bisphenol epoxides, and "DEN" series of epoxy novolak resins available from Dow Chemical, Midland, Mich., diglycidyl ether of fluorene Bisphenol, available from Shell Chemical Inc., Houston, Tex., under the trade designation "EPON HPT Resin 1079", a triglycidyl derivative of p-aminophenol commercially available from Ciba Performance Polymers, Brewster, N.Y. under the trade designation "MY 0500", a tetraglycidyl derivative of methylene dianiline commercially available from Ciba Performance Polymers, Brewster, N.Y. under the trade designation "MY 720". Flame retardant epoxides may also be used, for example, the flame retardant brominated Bisphenol-A diglycidyl ether commercially available from Dow Chemical, Midland, Mich., under the trade designation "DER 580". The term "derivative" as used herein with reference to thermosetting materials refers to a base molecule with additional substituents that do not interfere with the thermosetting bonding of the base molecule.

Representative aliphatic cyclic polyepoxides (i.e., cyclic compounds containing one or more saturated carbocyclic rings and at least two epoxide groups, also known as alicyclic compounds) useful in the present invention include the series of alicyclic epoxides commercially available from Union Carbide Corp., Danbury, Conn., under the trade designation "ERL", such as vinyl cyclohexene dioxide ("ERL-4206"), 3,4-epoxycyclohexylmethyl-3,4-epoxycyclohexane carboxylate ("ERL-4221 "), 3,4-epoxy-6-methylcyclohexyhnethyl-3,4-epoxy-6-methylcyclohexane carboxylate ("ERL-4201"), bis(3,4-epoxy-6-methylcycylohexylmethyl)adipate ("ERL-4289"), and dipentenedioxide ("ERL-4269").

Representative aliphatic polyepoxides (i.e., compounds containing no carbocyclic rings and at least two epoxide groups) include 1,4-bis(2,3-epoxypropoxy)butane, polyglycidyl ethers of aliphatic polyols such as glycerol, polypropylene glycol, 1,4-butanediol, and the like, the diglycidyl ester of linoleic acid dimer, epoxidized polybutadiene (for example, those available under the trade designation "OXIRON 2001" from FMC Corp., Philadelphia, Pa. or "Poly bd" from Elf Atochem, Philadelphia, Pa.), epoxidized aliphatic polyurethanes, and epoxy silicones, e.g., dimethylsiloxanes having cycloaliphatic epoxide or glycidyl ether groups.

Examples of suitable epoxide-based bondable layers that are commercially available in film form include those available from Minnesota Mining and Manufacturing Company ("3M"), St. Paul, Minn. under the trade designation "3M Scotch-Weld Structural Adhesive Film" including those having the following "AF" designations: "AF 42", "AF 111 ", "AF 126-2", "AF 163-2", "AF 3109-2", "AF 191 ", "AF 2635", "AF 3002", "AF 3024", and "AF 3030FST".

In one embodiment, a thermosetting activatable adhesive comprises a fusible epoxide prepolymer (which can melt and flow unlike a B stage resin) which is a solid at room temperature and, more preferably, further comprises a second epoxide component which may be solid or liquid at room temperature. Suitable solid fusible epoxide prepolymers include those described above which are a solid at room temperature.

An exemplary activatable adhesive composition may comprise a solid fusible epoxide prepolymer comprising a diglycidyl ether of Bisphenol A alone or in combination with a diglycidyl ether of Bisphenol A or Bisphenol F or a blend thereof. The activatable adhesive composition is a solid at room temperature after the addition of any optional components, more preferably the epoxide material (comprising single or multiple epoxides) is a solid at room temperature.

The term "urethane materials" as used herein applies to polymers made from the reaction product of a compound containing at least two isocyanate groups (-N=C=O), referred to herein as "isocyanates", and a compound containing at least two active-hydrogen containing groups. Examples of active-hydrogen containing groups include primary alcohols, secondary alcohols, phenols and water; and primary and secondary amines (which react with the isocyanate to form a urea linkage). A wide variety of isocyanate-terminated materials and appropriate co-reactants are well known, and many are commercially available (see for example, Gunter Oertel, "Polyurethane Handbook", Hanser Publishers, Munich (1985)).

In order to prepare storage-stable bondable layers based on urethane materials it is preferable to use either an isocyanate or an active hydrogen-containing compound that is blocked. The term "blocked" as used herein refers to a compound that has been reacted with a second compound (i.e. "blocking group") such that its reactive functionality is not available until such time as the blocking group is removed, for example by heating, or by further reaction, such as with water. Examples of blocked isocyanates include those that have been co-reacted with phenol, methyl ethyl ketoxime, and epsilon-caprolactam. Examples of blocked active-hydrogen containing compounds include aldehyde or ketone blocked amines (known as ketimines); aldehyde blocked aminoalcohol (known as oxazolidines); and amines that have been complexed with a salt such as sodium chloride.

When blocked isocyanates are used, examples of suitable co-reactants include polyether polyols such as poly(oxypropylene) glycols, ethylene oxide capped poly(oxypropylene) glycols, and poly(oxytetramethylene) glycols; diamino poly(oxypropylene) glycols; aromatic amine terminated poly(propylene ether) glycols; styrene-acrylonitrile graft polyols; poly(oxyethylene) polyols; polyester polyols such as polyglycol adipates, polyethylene terephthalate polyols, and polycaprolactone polyols; polybutadiene polyols, hydrogenated polybutadiene polyols, polythioether polyols, silicone carbinol polyols, polybutylene oxide polyols, acrylic polyols, carboxy-functional polypropylene oxide polyols, carboxy functional polyester polyols; and aromatic amine-terminated poly(tetrahydrofuran). Suitable urethane resins include blocked urethanes such as that available under the trade designation "Adeka Resin QR-9276" from Asahi Denka Kogyo K. K. Tokyo, Japan, and urethane modified epoxides such as that available under the trade designation "Rutapox VE 2306" from Rutgers Bakelite GmbH, Duisburg, Germany.

Suitable cyanate ester materials (monomers and oligomers) are those having two or more - OCN functional groups, including those described in U.S. Pat. No. 5,143,785, incorporated herein by reference. Examples of suitable cyanate ester compounds include the following: 1,3-and 1,4-dicyanatobenzene; 2-tert-butyl-1,4-dicyanatobenzene; 2,4-dimethyl-1,3-dicyanatobenzene; 2,5-di-tert-butyl-1,4-dicyanatobenzene; tetramethyl-1,4-dicyanatobenzene, 4-chloro- 1,3-dicyanatobenzene; 1,3,5-tricyanatobenzene; 2,2, -or 4,4, -dicyanatobiphenyl; 3,3', 5,5',-tetramethyl-4,4',-dicyanatobiphenyl; 1,3-, 1,4-, 1,5-, 1,6-, 1,8-, 2,6-, or 2,7-dicyanatonaphthalene; 1,3,6-tricyanatonaphthalene; bis(4-cyanatophenyl)methane; bis(3-chloro-4-cyanatophenyl)methane; bis(3,5-dimethyl-4-cyanatophenyl)methane; 1,1-bis(4-cyanatophenyl)ethane; 2,2-bis(4-cyanatophenyl)propane; 2,2-bis(3,5-dibromo-4-cyanatophenyl)propane; 2,2-bis(4-cyanatophenyl)-1,1,1,3,3,3-hexafluoropropane; bis(4-cyanatophenyl)ether; bis(4-cyanatophenoxyphenoxy)benzene; bis(4-cyanatophenyl)ketone; bis(4-cyanatophenyl)thioether; bis(4-cyanatophenyl)sulfone; tris(4-cyanatophenyl)phosphite; and tris(4-cyanatophenyl)phosphate. Polycyanate compounds obtained by reacting a phenolformaldehyde precondensate with a halogenated cyanide are also suitable.

Other suitable materials include cyanic acid esters derived from phenolic resins as described in U.S Pat. No. 3,962,184, cyanated novolac resins derived from novolac resins as described in U.S. Pat. No. 4,022,755, cyanated bisphenol-type polycarbonate oligomers derived from bisphenol-type polycarbonate oligomers as described in U.S. Pat. No. 4,026,913, cyanato-terminated polyarylene ethers as described in U.S. Pat. No. 3,595,900, dicyanate esters free of ortho hydrogen atoms as described in U.S. Pat. No. 4,740,584, mixtures of di-and tricyanates as described in U.S. Pat. No. 4,709,008, polyaromatic cyanates containing polycyclic aliphatics as described in U.S. Pat. No. 4,528,366, fluorocarbon cyanates as described in U.S. Pat. No. 3,733,349, and other cyanate compositions as described in U.S. Pat. Nos. 4,195,132 and 4,116,946, An exemplary commercially available material is a cyanate ester available from Ciba Performance Polymers, Brewster, N.Y. under the trade designation "Quatrex 7187".

Suitable phenolic resins are generally described in Encyclopedia of Polymer Science and Engineering, Volume 11, John Wiley & Sons, Inc. (New York, 1988), pp. 45-92. Phenolic-based resins are generally described in Alphonsus V. Pocius, Adhesion and Adhesives Technology: An Introduction, Hanser Publishers (New York, 1997), pp.185-188. Preferred phenolic resins that can be used to impregnate a sheet which is suitable to prepare hot press laminated products from wood veneers are discussed in U.S. Pat. No. 1,960,176. Suitable phenolic materials are those made as the reaction product of phenols and formaldehydes, including resole phenolics and novolac phenolics. Examples of phenols include phenol, resorcinol, para-substituted phenol, cresol, and the reaction product of bisphenol A and the monoglycidyl ether of bisphenol A. Exemplary phenolic-based bondable layers include tissue paper impregnated with a thermosetting phenolic resin at a ratio of approximately two parts resin to one part tissue paper commercially available under the trade designation "Phenolic Glue Film" from Dyno Overlays Inc., High Point, N.C.

Resole phenolic resins are characterized by being alkaline catalyzed and having a molar ratio of formaldehyde to phenol of greater than or equal to 1:1. Typically, the ratio of formaldehyde to phenol is within a range of about 1:1 to about 3:1. Examples of suitable alkaline catalysts for preparing resole phenolic resins include sodium hydroxide, potassium hydroxide, organic amines, or sodium carbonate.

Novolac phenolic resins are characterized by being acid catalyzed and having a molar ratio of formaldehyde to phenol of less than 1:1. Typically, the ratio of formaldehyde to phenol is within a range of about 0.4:1 1 to about 0.9:1. Examples of the acid catalysts used to prepare novolac phenolic resins include sulfuric, hydrochloric, phosphoric, oxalic, or p-toluenesulfonic acids. Although novolac phenolic resins are typically considered to be thermoplastic resins rather than thermosetting resins, they can react with other chemicals (e.g., hexamethylenetetraamine) to form a thermoset resin.
Examples of useful commercially available resole or novolac phenolic resins include "Varcum" from BTL Specialty Resins Corporation, Blue Island, I11.; "Arofene" from Ashland Chemical Company, Columbus, Ohio; "Bakelite" from Union Carbide, Danbury, Conn.; and "Resinox" from Monsanto Chemical Company, St. Louis, Mo.
Suitable nitrile phenolic materials include those made by including butadiene-nitrile elastomers in novolac phenolic resin-based materials. Examples of suitable nitrile phenolic based bondable layers that are commercially available in film form include those available from Minnesota Mining and Manufacturing Company ("3M"), St. Paul, Minn. under the trade designation "3M Scotch-Weld Structural Adhesive Film" and having the following "AF" designations: "AF 10", "AF 30", "AF 31" and "AF 32".

Examples of suitable bismaleimide materials, also known as N,N'-bismaleimide monomers and prepolymers, include the N,N'-bismaleimides of 1,2-ethanediamine, 1,6-hexanediamine, trimethyl-1,6-hexanediamine, 1,4-benzenediamine, 4,4'-methylene-bis(benzenamine), 2-methyl-1,4-benzenediamine, 3,3'-methylene-bis(benzenamine), 3,3'-sulfonyl-bis(benzenamine), 4,4'-sulfonyl-bis(benzenamine), 3,3'-oxy-bis(benzenamine), 4,4'-oxy-bis(benzenamine), 4,4'-methylene-bis(cyclohexanamine), 1,3-benzenedimethanamine, 1,4-benzenedimethanamine, and 4,4'-cyclohexane-bis(benzenamine) and mixtures thereof; Other N,N'-bis-maleimides and their process of preparation are described in U.S. Pat. Nos. 3,562,223; 3,627,780; 3,839,358; and 4,468,497, all of which are incorporated herein by reference. Representative examples of commercially available bismaleimide materials include the series of materials available from Shell Chemical, Houston, Tex. under the trade designation "COMPIMIDE" such as 4,4'-bismaleimidodiphenyl methane ("COMPIMIDE Resin MDAB"), and 2,4'-bismaleimidotoluene ("COMPIMIDE Resin TDAB"), and from Dexter/Quantum, San Diego, Calif. under the trade designation "Q-Bond".

A thermosetting bondable layer preferably comprises a thermosetting material and a curative or curatives. The term "curative" is used broadly to include not only those materials that are conventionally regarded as curatives but also those materials that catalyze or accelerate the reaction of the curable material as well as those materials that may act as both curative and catalyst or accelerator. It is also possible to use two or more curatives in combination.

Preferred heat activated curatives for use in the present invention exhibit latent thermal reactivity; that is, they react primarily at higher temperatures (preferably at a temperature of at least 80° C.), or react at lower temperatures only after an activation step such as exposure to actinic radiation. This allows the adhesive composition to be readily mixed and coated at room temperature (about 23 ±3° C) or with gentle warming without activating the curative (i.e., at a temperature that is less than the reaction temperature for the curative). One skilled in the art would readily understand which curatives are appropriate for each class of thermosetting materials.

Suitable curatives for epoxide polymerization include polybasic acids and their anhydrides; nitrogen-containing curatives; chloro-, bromo-, and fluoro-containing Lewis acids of aluminum, boron, antimony, and titanium; photochemically activated generators of protic or Lewis acids; and phenolic materials as described above. Exemplary polybasic acids and their anhydrides include di-, tri-, and higher carboxylic acids such as oxalic acid, phthalic acid, terephthalic acid, succinic acid, alkyl substituted succinic acids, tartaric acid, phthalic anhydride, succinic anhydride, malic anhydride, nadic anhydride, pyromellitic anhydride; and polymerized acids, for example, those containing at least 10 carbon atoms, such as dodecendioic acid, 10,12-eicosadiendioic acid, and the like.

Nitrogen-containing curatives include, for example, dicyandiamide, imidazoles (e.g. hexakis(imidazole) nickel phthalate), imidazolates, dihydrazides (e.g. adipic dihydrazide and isophthalic dihydrazide), ureas, and melamines, as well as encapsulated aliphatic amines (e.g., diethylenetriamine, triethylenetetraamine, cyclohexylamine, triethanolamine, piperidine, tetramethylpiperamine, N,N-dibutyl-1,3-propane diamine, N,N-diethyl-1,3-propane diamine, 1,2-diamino-2-methyl-propane, 2,3-diamino-2-methyl-butane, 2,3-diamino-2-methyl-pentane, 2,4-diamino-2,6-dimethyl-octane, dibutylamine, and dioctylamine). The term "encapsulated" as used herein means that the amine is surrounded by a material that prevents it from acting as a curative until the application of heat. Polymer bound amines or imidazoles may also be used. Pyridine, benzylamine, benzyldimethylamine, and diethylaniline are also useful as heat activated curatives.

Examples of nitrogen-containing curatives include those commercially available from Air Products, Allentown, Pa., under the trade designations, "Amicure CG-1200", "AMICURE CG-1400", "Ancamine 2337", "Ancamine 2441", "Ancamine 2014"; and those from Asahi Denka Kogyo K. K. Tokyo, Japan, under the trade designations "Ancamine 4338S" and "Ancamine 4339S"; those from CVC Specialty Chemicals, Mapleshade, N.J., under the trade designations "Omicure U-52" and "Omicure U-410" as well as the other materials in the "Omicure" series; those from Landec, Menlo Park, Calif., under the trade designations "Intellimer 7001" ,"Intellimer 7002", ,"Intellimer 7004", and "Intellimer 7024"; those from Shikoku Fine Chemicals, Japan, and sold by Air Products, as the series of materials available under the trade designation "Curezol"; and those from Ajinomoto Company Inc., Teaneck, N.J., as the series of materials available under the trade designation "Ajicure".

Exemplary chloro-, bromo-, and fluoro-containing Lewis acids of aluminum, boron, antimony, and titanium include aluminum trichloride, aluminum tribromide, boron trifluoride, antimony pentafluoride, titanium tetrafluoride, and the like. Preferably, these Lewis acids may be blocked to increase the latency of the thermosetting material. Representative blocked Lewis acids include BF₃ -monoethylamine, and the adducts of HSbF₅ X, in which X is halogen, --OH, or --OR¹ in which R¹ is the residue of an aliphatic or aromatic alcohol, aniline, or a derivative thereof, as described in U.S. Pat. No. 4,503,211.

Suitable photochemically activated curatives for epoxide polymerization include cationic photocatalysts that generate an acid to catalyze polymerization. It should be understood that the term "acid" can include either protic or Lewis acids. These cationic photocatalysts can include a metallocene salt having an onium cation and a halogen containing complex anion of a metal or metalloid. Other useful cationic photocatalysts include a metallocene salt having an organometallic complex cation and a halogen-containing complex anion of a metal or metalloid which are further described in U.S. Pat. No. 4,751,138 (e.g., column 6, line 65 to column 9, line 45). Other examples of useful photocatalysts include organometallic salts and onium salts, for example, those described in U.S. Pat. No. 4,985,340 (e.g., col. 4, line 65 to col. 14, line 50) and in European Patent Applications 306,161 and 306,162. Still other cationic photocatalysts include an ionic salt of an organometallic complex in which the metal is selected from the elements of Periodic Group IVB, V 13, VIB, V1113 and VIIIB which is described in European Patent Application 109,581. A suitable photochemically activated curative is a curative commercially available from Ciba-Geigy, Hawthorne, N.Y. under the trade designation "Irgacure 261".

Suitable curatives for urethane materials include the nitrogen-containing curatives as described for use with epoxides (which can react with a blocked isocyanate group after the deblocking reaction to give a urea) as well as, for example, materials containing hydroxyl (e.g., phenols) or thiol functionality that can react with the deblocked isocyanate. Photochemically activated generators of protic or Lewis acids can be used to enhance these reactions.

Suitable curatives for cyanate ester materials include the nitrogen-containing curatives as described for use with epoxides as well as curatives that may be thermally or photochemically activated. Examples of such curatives include organometallic compounds containing a cyclopentadienyl group (C₅ H₅) and derivatives of a cyclopentadienyl group. Suitable curatives include cyclopentadienyl iron dicarbonyl dimer ([C₅ H₅ Fe(CO)₂]₂), pentamethylcyclopentadienyl iron dicarbonyl dimer ([C₅ (CH₃)₅ Fe(CO)₂ ]₂), methylcyclopentadienyl manganese tricarbonyl (C₅ H₄ (CH₃)Mn(CO)₃), cyclopentadienyl manganese tricarbonyl (C₅H₅ Mn(CO)₃), all of which are available from Strem Chemical Company, Newburyport, Mass. Other suitable curatives include the hexafluorophosphate salt of the cyclopentadienyl iron mesitylene cation (C₅ H₅ (mesitylene)Fe⁺ PF₆⁻), and the trifluoromethanesulfonate salt of the cyclopentadienyl iron mesitylene cation (C₅ H₅ (mesitylene)Fe⁺ (CF₃ SO₃⁻)), both of which may be prepared by methods described in U.S. Pat. No. 4,868,288.

Suitable curatives for phenolic materials and for nitrile phenolic materials include hexamethylene tetraamine (a latent source of formaldehyde) as well as combinations of organic acids (e.g. phosphoric acid, para toluene sulfonic acid, and salicylic acid) and metallic oxides (e.g. zinc oxide and magnesium oxide).

Suitable curatives for bismaleimide materials include the nitrogen containing curatives as described for use with epoxides as well as latent sources of allyl phenol.

In an alternative embodiment, the activatable adhesive composition may be based on a thermoplastic material. Suitable thermoplastic materials include, for example, polyesters, ethylene vinyl acetate (EVA), polyurethanes, polyamides, polyolefins, and derivatives thereof. The term "derivative" as used herein with reference to thermoplastic materials refers to a base molecule with additional substituents that are not reactive towards a crosslinking or polymerization reaction. Thermoplastic materials, by nature, typically do not require curatives.

A hybrid material, as a further embodiment of the activatable adhesive composition, is a combination of at least two components wherein the at least two components are compatible in the melt phase (the melt phase is where the combination of the at least two components is a liquid), the at least two components form an interpenetrating polymer network or semi-interpenetrating polymer network, and at least one component becomes infusible (i.e., the component cannot be dissolved or melted) after application of heat or by other means of curing such as application of light. A first component is a crosslinkable material and a second component is (a) a thermoplastic material, (b) monomers, oligomers, or polymers (and any required curative) which can form a thermoplastic material, (c) a thermosetting material, i.e., monomers, oligomers, or prepolymers (and any required curative) which can form a thermosetting material. The second component is chosen so that it is not reactive with the first component. It may be desirable, however, to add a third component which may be reactive with either or both of the crosslinkable material and second component for the purpose of, for example, increasing the cohesive strength of the bonded hybrid material.

Suitable first components include thermosetting materials, for example, the thermosetting materials described above, as well as crosslinkable elastomers such as acrylics and urethanes as described above.

Suitable thermoplastic second components include those thermoplastic materials described above. Suitable thermoplastics which can be formed in situ, i.e., with monomers, oligomers, or polymers (and any required curative) which can form a thermoplastic material without undergoing any significant crosslinking reaction would be readily apparent to one skilled in the art. Exemplary hybrid materials incorporating a second component (a) are described, for example, in PCT/EP98/06323; U.S. Pat. No. 5,709,948, and U.S. Ser. No. 09/070,971. Exemplary hybrid materials incorporating a second component (b) are described, for example, in U.S. Pat. No. 5,086,088. Example 1 of U.S. Pat. No. 5,086,088 illustrates an example of a thermoplastic material formed in situ.

Suitable thermosetting second components include those thermosetting materials described above. Exemplary hybrid materials incorporating a second component (c) are described, for example, in U.S. Pat. No. 5,494,981.

A particularly preferred activatable adhesive composition is an epoxy based composition as disclosed in US 6,506,494. Thus, in this embodiment, the activatable adhesive composition comprises:
A) an epoxy resin capable of being cured to a cured epoxy resin when exposed to an activated latent curative system;
B) a latent curative system in an amount sufficient to cure said epoxy resin, comprising (a) at least one epoxy resin miscible first curative comprising a latent hardener, selected from dicyandiamide and its derivatives, contained substantially as a core within a multiplicity of ambient-temperature-stable, impermeable microcapsules having capsule walls comprised of a thermoplastic polymeric material and (b) at least one epoxy resin latent second curative comprising a latent accelerator which is a metal imidazolate compound. The metal imidazolate may be a compound of the formula:

   MLₘ

   wherein M is a metal selected from the group of Ag(I), Cu(I), Cu(II), Cd(II), Zn(II), Hg(II), Ni(II) and Co(II),
   L is an imidazolate of the formula: 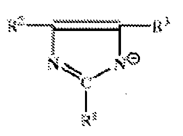 wherein R', R², and R³ are selected from a hydrogen atom, an alkyl radical typically having 1 to 10, preferably 1 to 6 carbon atoms or an aryl radical typically having 6 to 18, preferably 6 to 12 carbon atoms and m is the valence of M, in an amount sufficient when activated to cure said epoxy resin admixed uniformly within said curable epoxy resin, wherein the microcapsule walls isolate the first curative from the second curative.

The exemplary activatable adhesive compositions referred to above may be used singly or in combinations of two or more compatible representatives thereof in the sheath of the adhesive article of the present invention.

The pressure sensitive adhesive which may be present in the sheath of the presently claimed adhesive article is preferably an acrylic based pressure sensitive adhesive, but other pressure sensitive adhesives are contemplated as well and may be used. Such other pressure sensitive adhesives include for example those based on silicones or based on polyolefins as disclosed in Handbook of Pressure Sensitive Adhesive Technology (third edition) D. Satas, Ed. Satas and Associates, Warwick RI/USA, 1989 on pages 550-556 and 423-442 respectively.

Particular examples of suitable pressure sensitive adhesives include, but are not limited to, adhesives based on general compositions of poly(meth)acrylate; polyvinyl ether; diene rubber such as natural rubber, polyisoprene, and polybutadiene; polyisobutylene; polychloroprene; butyl rubber;butadiene-acrylonitrile polymer; thermoplastic elastomer; block copolymers such as styrene-isoprene and styrene-isoprene-styrene (SIS) block copolymers, ethylenepropylene-diene polymers, and styrene-butadiene polymers; poly-alpha-olefin; amorphous polyolefin; silicone; ethylene-containing copolymer such as ethylene vinyl acetate, ethylacrylate, and ethyl methacrylate; polyurethane; polyamide; epoxy; polyvinylpyrrolidone and vinylpyrrolidone copolymers; polyesters; and mixtures or blends of the above. The pressure sensitive adhesive composition may contain additives including, but not limited to, tackifiers, plasticizers, fillers, antioxidants, stabilizers, pigments, diffusing materials, curatives, fibers, filaments, and solvents.

Pressure sensitive adhesives that may be used in combination with activatable adhesives to preliminarily bond to substrates having a low surface energy or oily surfaces, include for example pressure sensitive adhesives based on an acrylic copolymer of one or more alkyl esters of acrylic or methacrylic acid and a vinyl ester as disclosed in for example EP 1 318 181 or a pressure sensitive adhesive as disclosed in EP 1 245 656 which discloses a pressure sensitive adhesive composition that contains (i) the reaction product obtainable from a precusor composition comprising one or more alkyl esters of acrylic or methacrylic acid, one or more copolymerizable monomers that have a Lewis base functionality and optionally one or more cross-linkers and (ii) one or more tackifying resins. Still further pressure sensitive adhesive that may be particularly useful for adhesion to an oily surface are disclosed in WO 95/13331.

Suitable commercially available pressure sensitive adhesives include those commercially available from 3M Company under the designation VHB.

Generally, the manufacture of the adhesive article according to the invention comprises the steps of: (i) providing a core comprising a fibrous web and (ii) applying to the core a sheath comprising an adhesive composition.

The adhesive compositions included in the sheath may be formulated as a tape or film comprising at least one major adhesive surface. The adhesive composition may also be present on both major surfaces of the tape or film. In such a form, the adhesive can be wound around the core to provide the sheath of the adhesive article according to the invention. Preferably, the adhesive composition(s) contained in the tape or film has a sufficient initial level of tack at least on one side to adhere to the core and to provide a sheath/core structure which is sufficiently stable for handling and application.

Alternatively, the adhesive compositions may be formulated as a fluid and may be coated as such on the surface of the core to provide a sheath which fully or partly covers the core. Suitable methods for coating are not limited and include a method of applying a solution or suspension of an adhesive composition, e.g. by spraying, roll coating, extrusion, coextrusion, flow coating, microfiberisation, or by application of beads of a liquid or paste adhesive, etc. optionally accompanied or followed by a step of drying or further treatment such as heat processing or exposure to radiation to effect further chemical or physical change in the applied composition.

As set out above, compressibility and/or flexibility of the adhesive article may be improved by structuring the sheath. For example, the sheath may be formed so as to extend along the surface of the core in a discontinuous manner. Such a sheath may provide holes, cuts or other apertures which may or may not extend fully around the perimeter of the adhesive article.

One embodiment of such a structured sheath would be a sheath comprising separate loops of the sheath material which extend fully around the perimeter of the adhesive article or at least around the major part of the perimeter. For example, such loops may conveniently be obtained by winding strips of an adhesive composition formulated as a tape as set out above around the core in predetermined distances. The width of the loops and the width of the distances between them may be independently chosen according to necessity. For example, the width of the tape may range from 5 to 30 mm and the distance between the loops may range from 2 to 20 mm. The loops may be applied around the perimeter in a direction perpendicular to the longitudinal axis of the adhesive article, or they may be inclined towards the longitudinal axis, resulting in continuous or discontinuous helical structures.

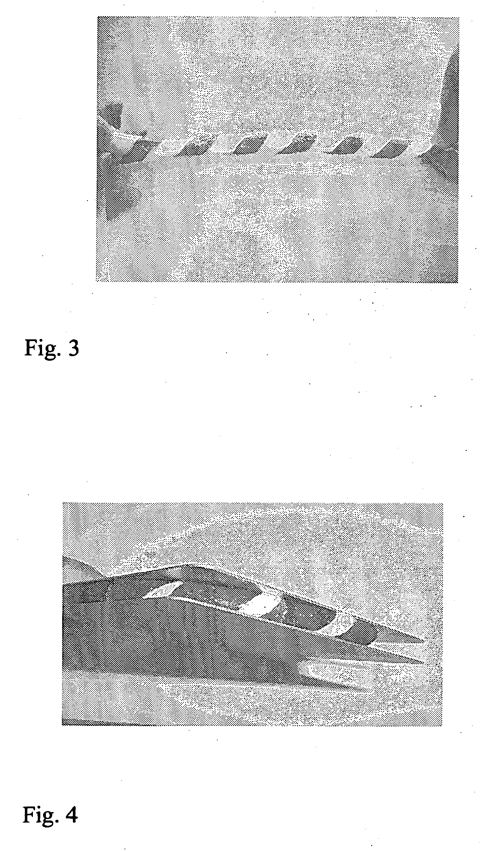

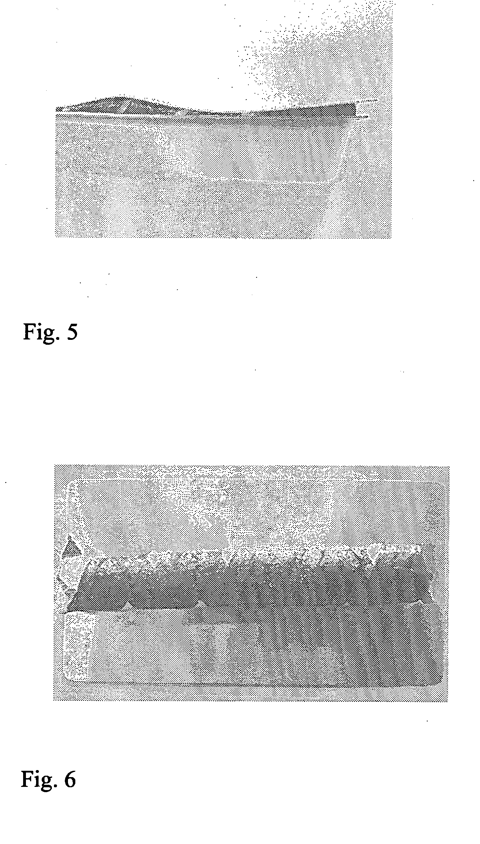

Thus, a particular embodiment of such a structured sheath would be a sheath comprising at least one helix comprising an adhesive composition, the at least one helix extending in longitudinal direction along at least a portion of the core. Such an embodiment is shown in Fig. 3. Also, the sheath may comprise at least one second helix comprising an adhesive composition which is counter wound to the first helix and which extends in longitudinal direction along at least a portion of the core. Preferably, the at least one first helix and the at least one second helix extend in longitudinal direction at least partially along the same portion of the core so as to form a counter wound double helix. The respective embodiment is shown in Fig. 6. Preferably, the helix/helices should leave a certain amount of space between the separate windings so that a part of the surface of the core remains uncovered. For example, such helices may conveniently be obtained by winding strips formulated as a tape or application of beads of a liquid or paste adhesive as set out above around the core with a predetermined distance between the separate windings. The width of the windings and the width of the distances between them may be independently chosen according to necessity. For example, the width of a winding may range from 5 to 30 mm and the distance between the windings may range from 2 to 20 mm.

Further methods of structuring the sheath to increase its flexibility include the application of the sheath in varying thicknesses. For example, sections of the adhesive article having a thicker, less flexible sheath may alternate with sections which carry a reduced amount of the sheath material. In a further embodiment, the sheath may comprise grooves which are applied so as to facilitate bending of the adhesive article along its longitudinal axis.

It should be understood that the different methods of structuring the sheath referred to above are not mutually exclusive and can be used in combination in one adhesive article.

In addition to the core and the sheath, the adhesive article of the present invention may be provided with one or more release liners to protect an outer surface of an adhesive layer. Typically, the release liner comprises a film or paper substrate coated with a release material.

The method of activation to form a bond between the adhesive article and a substrate to which it is applied, if required, depends on the adhesive composition present in the adhesive layer and can be suitably selected for a variety of applications. Generally, the adhesive composition is activated and bonds much more quickly and more uniformly than bulk adhesive systems, because there is very little mass of the adhesive. Only the very thin outer layer of adhesive cures/polymerizes and this does not result in a reduced normal contraction force, which could damage the surface of the substrate. Thus, there is reduced read-through due to the fact that there is no net volume reduction because the bulk of the gap filling system does not cure/polymerise. Cure is also completely uniform due to low mass.

For example in heat activatable adhesives, cure temperatures are reached rapidly. In addition, there is typically no exotherm, so the probability of adhesive overheating or charring is negligible. In addition, if the core materiel is porous, any residual liquids, such as pre-electrocoat washing solutions present on parts to be bonded in the automotive industry, will drain rapidly away through the adhesive and any remaining moisture will evaporate rapidly during heat activation.

The adhesive articles of the present invention are suitable for a variety of applications which require bonding, filling, dampening, sealing or stiffening properties.

Thus, the invention further provides a method of bonding comprising bonding the adhesive article according to the invention to a substrate. Generally, in bonding applications, the adhesive article is bonded to a first and second substrate so as to bond said first and second substrate to each other. Often, joining processes using the adhesive articles according to the invention comprise the application of the article to a surface and then bringing a second surface in contact with it while compressing the joint to the correct height.

The adhesive articles according to the invention may be flexibly applied and adapted, e.g., to corners as demonstrated in Fig. 4. They have a beneficial gap filling capability, and may easily be adapted to gaps ranging between lower limits of 0.2 or even 0.1 mm and upper limits of 20 mm, 30 mm or even 40 or 50 mm. The adhesive articles of the present invention have particular advantages in joints with a non-uniform distance between the substrates to be joined, as shown in Fig. 5. In such a case, the adhesive article may bridge and support an important gap at areas of higher distance. In areas of reduced distance, the core is more compressed so that areas of higher bond strength are achieved.

For specific applications, it is possible to provide adhesive articles of which the core can be removed, e.g. by the action of heat, after a bond has been established to the first and the second substrate. Such a property could be used for example to provide hollow, lightweight adhesive structures or for recycling purposes.

It is also possible to apply the adhesive article according to the invention for stiffening, dampening or insulation purposes. Thus, the invention further provides a method of enhancing the stiffness of a substrate, for dampening a substrate or to improve the insulative properties of a substrate comprising bonding the adhesive article according to the invention to a substrate. It is possible to apply the adhesive article according to the invention to a single substrate or to two or more substrates for these purposes.

On or between substrates, the adhesive articles according to the invention may form a pattern which provides increased stiffness, dampening and/or insulative properties at a low weight, similar to honeycomb cores. For example, a plurality of the adhesive articles, positioned parallely or in any other desired configuration, may form an array. Alternatively, the adhesive article may be positioned on or between substrates in more or less dense S-curves for the same purpose. Thus, for example a high stiffness may be obtained with minimal weight increase by using the adhesive article according to the invention. The benefit of this is to enhance performance, reduce denting and dampen vibration e.g. on hoods, doors or roofs of transportation vehicles such as car and vans.

For example, the adhesive article according to the invention can be used to bond a variety of substrates, such as metal sheets or panels, plastic or composite materials. In a particular embodiment, the adhesive article is used to bond to a component of a transportation vehicle, such as an aircraft, boat, bus or train, in particular to a component of a motor vehicle such as a car, a bus, a truck or other motor vehicle for use on a road. In a further embodiment, the adhesive article is used to bond components of such a transportation vehicle, in particular motor vehicle for use on the road, together. Still further, the adhesive article may be suitably used for gap filling purpose in the aforementioned vehicles.

Application in the form of an adhesive article ensures easy and safe handling compared, e.g. to the application of a liquid or paste adhesive formulation.

The adhesive article according to the invention can be applied to a substrate, such as a sheet or a panel of metal, plastic or of a composite material, and the fibrous web can be rendered stiff by any of the methods set out above, such as fiber linkage, melting or any other form of chemical cure. The effect of such an adhesive article would be to further stiffen the substrate to which it is applied.

Finally, the property of high stiffness but easy deformation under excessive loads which may be achieved with the adhesive article of the present invention can be useful for example in situations where a vehicle impacts a pedestrian. Using a properly selected adhesive article according to the invention as a stiffener, day-to-day normal panel stiffness is retained, but in case of impact higher levels of deformation may be achieved.

### Examples

### Materials used for the example preparation

### a) Structural Epoxy Film Adhesive

As the heat activatable adhesive, use was made of a cross-linkable adhesive film SAF 6045 commercially available from the 3M Company (St. Paul, MN/USA). SAF 6045 is a modified epoxy film and has a nominal thickness of 0.4 mm. Typical overlap shear values according to ASTM 1002-94 measured initial at 23°C, after having the sample cured at 165°C for 15 minutes plus 10 minutes oven ramp, are, depending on the substrate, between 15.3 MPa and 19.0 MPa.

### b) Fibrous web made by vertical cross-lapping technology (300 g/m² weight)

The fibrous web used was made up of 15 den polyethyleneterephtalate (PET) staple fibres, available from Inquitex SA /Spain under the commercial name PET fibre type 101. The typical length of the PET staple fibres was between 38 to 42 mm, and the fibres had an average elongation of 80%. The web further comprised thermal bond fibres, also known as bicomponent (BICO) fibres. The bicomponent fibres were core-sheath fibres, composed of a copolymer polyethylene terephtalate/ polyethylene isophtalate (sheath) and a homopolymer polyethylene terephtalate (core) having an average staple length of 50 mm, commercially available by Tangerding, Germany

For manufacturing the non-woven web, small batches (100g) of the fibre blend ― comprising of 80% 15 den PET fibres and 20% thermal bond BICO fibres - were mixed by hand. These batches were then hand fed into a single cylinder card at a constant rate. The carded web was then cross-lapped and lightly needle punched and then folded in half along its length. This pre-web was then used to feed a second single cylinder card, which provided the web used that is fed into the vertical cross lapper (VCL).

The vertical cross-lapping process was run on a Struto machine (developed in the Czech Republic at the University of Liberec) set up to give the desired thickness and the thermal bond oven set at 140°C with a double belt collector. The Struto process uses a bar to force the fibres into a vertical orientation. Such a process pushes the ends of the fibres at the point when the direction is changed out of the loop giving a highly oriented product in the z-direction.

For test assembly preparation, one-side ground steel panels (available as RS/14 from Q-Panel Company Express Trading Estate, Farnworth, Bolton, BL49TP,U.K.) were selected. The panels were 1.6 mm thick and had dimensions of 10.2 mm by 15.2 mm. No cleaning was conducted prior to assembling the panels with the tubular adhesives. Accordingly, the panels were used as supplied, having oil on them which is applied in order to avoid corrosion occurring. The oil tends to evaporate in the oven bake cycle at 180°C.

### Example Preparation

### Example 1:

The previous described vertical cross-lapped fibrous web strips (2 cm thick, 2 cm width) were selected as the core material, being composed of 80% 15 den PET fibres and 20% 4.4 den Bico thermal bond fibres.
These fibrous web strips were wrapped on their outsides with the heat activatable adhesive film, using a non-overlapping technique as shown in Fig. 3 to yield a helix of the adhesive tape.

The material was then placed between two 1.6 mm thick one-side ground steel panels. The so acquired test assembly was then pushed together by hand and conditioned at 23°C and 50 % relative humidity for 24 hours before testing.
After conditioning the test assembly was placed in a forced air oven and the temperature was raised to 180 °C according to the following programmed profile:
- The oven temperature was ramped up from 23°C in 10 minutes to 180°C
- The oven temperature was then held at 180°C for 30 minutes
- After 30 minutes the oven was turned off, the oven door opened and the sample allowed to remain in the oven until cooled out. After the test assembly removal from the oven the curing cycle of the adhesive was seen as completed

The cured test assembly was conditioned at 23°C and 50% relative humidity for 24 hours prior to testing.

### Example 2:

A second sample material was prepared using the same VCL fibrous web as described in example 1, but by wrapping the cross-linkable film adhesive in a counter-wound double helix structure around the core material. Hereby the strip of the non-woven fabric was cut from the VCL sheet by making a cross web cut, axial with corrugation. The cut section was 20 mm wide and 200 mm long. The 3M SAF 6045 epoxy film adhesive (commercially available from the 3M Company, St. Paul, MN/USA) was then applied by winding the tape in a helical pattern using a pitch of 24 mm leading edge to leading edge. The winding procedure was repeated by using the same tape but applied in the opposite direction to the first tape. This created a cylinder epoxy adhesive wound in a crossover pattern around the flexible non-woven core. The resultant diameter of the non-woven tube was approximately 16 mm.

The counter-wrapped double helix structure was highly flexible and capable of high conformance.

The so-formed tubular stiffener was applied length-wise to a thin, one-side brushed steel panel of the following dimensions; 102 mm x 152 mm x 0.254 mm, of type brushed one side supplied by the Q-Panel Company. This panel was used as received without any additional surface preparation and the adhesive was applied to the brushed surface. After conditioning the test assembly at 23°C and 50 % relative humidity for 24 hours it was placed in a forced air oven and cured 20 minutes at 176°C without any specific ramp up time. The oven was at temperature when the sample was placed in it and there was no programmed ramp up to temperature.

In this cured state example 2 material turns very strong and stiff, providing a tubular stiffening system suitable for single-sided applications such as replacement of top hat stiffeners or more expensive doublers against stressed skin.

### 3-Point Bend Test

A 3-point bend test was performed with the adhesive article of example 2.

For performing this test a counter wound adhesive article according to example 2 was length-wise bonded centrally along the long axis of the steel panel. The panel was supported on aluminium trestles on both sides of the adhesive and the trestles had a height of 30 mm. The contact with the panel was 30 mm x 3 mm on each side of the adhesive article. The same was done on the other side of the panel so that it was like a table supported on four 30 mm edges at right angles to the long axis of the panel. These supports were then placed 140 mm apart thus leaving a 140 mm span between trestles. Now the central portion of the panel was pushed down to measure the force to deflect. This was done with a flat MDF probe of end dimensions 37 mm x 8 mm placed in the centre of the panel with the 37 mm length at right angles to the long axis of the panel. The probe was now moved down at constant speed (1 mm/minute) and the force required measured in compression using normal tensometry. Test results are given in Table 1 below.

**Table 1**

| Panel deflection (mm) | With adhesive article as stiffener (force (N) | Control (no stiffener) (force (N) |
|---|---|---|
| | | |
| 0 | 0 | 0 |
| 1 | 13 | 0.6 |
| 2 | 22 | 1.3 |
| 3 | 37 | 2.0 |
| 4 | 50 | 2.7 |
| 5 | 61 | 3.3 |

A strong structural bond was created in examples 1 and 2. The results of the 3-point bend test performed with example 2 additionally showed a clear improvement in panel stiffness up to a 6 mm deflection. It is interesting to note that the adhesive article used to achieve this increase in stiffness weighed only 6.58g. This enabled the plate to carry a load of nearly 70N (7000g) before failure. Up to the break point, the panel stiffness was increased by a factor of 17 for the selected panel thickness.

## Claims

1. An adhesive article comprising an elongated core comprising a non-woven fibrous web, said core being provided with a sheath comprising an adhesive composition comprising an activatable adhesive, wherein the smallest diameter of the core is 6 mm or above and wherein the adhesive article is reversibly compressible in a least one direction perpendicular to the longitudinal axis by at least 30% and such that upon removal of the load compressing the adhesive article, the article restores to at least 90% of its original dimension.

2. Adhesive article according to claim 1, wherein the sheath extends discontinuously along the surface of the core.

3. Adhesive article according to claim 1, wherein the sheath comprises at least one helix extending in longitudinal direction along at least a portion of the core.

4. Method of bonding comprising bonding the adhesive article as defined in any of claims 1 to 3 to at least one first and at least one second substrate so as to bond said first and second substrate to each other.

5. Method according to claim 4 wherein said first and second substrate define between them a gap of between 0.2 mm and 20 mm and wherein said adhesive article fills said gap.

6. Method of enhancing the stiffness of a substrate comprising bonding the adhesive article as defined in any of claims 1 to 3 to the substrate.

7. Use of an adhesive article of any of claims 1 to 3 for bonding or stiffening components in a transportation vehicle.

## Patentansprüche

1. Klebeartikel mit einem länglichen Kern, aufweisend eine Vliesfaserbahn, wobei der Kern mit einem Mantel versehen ist, der eine Klebezusammensetzung aufweist, die einen aktivierbaren Kleber aufweist, wobei der kleinste Durchmesser des Kerns 6 mm oder darüber beträgt und wobei der Klebeartikel in mindestens eine Richtung senkrecht zur Längsachse um mindestens 30% reversibel komprimierbar ist und derart, dass sich bei Entfernung der den Klebeartikel komprimierenden Last der Artikel wieder auf mindestens 90% seiner Originalausmessung aufbaut.

2. Klebeartikel nach Anspruch 1, wobei sich der Mantel diskontinuierlich entlang der Fläche des Kerns erstreckt.

3. Klebeartikel nach Anspruch 1, wobei der Mantel mindestens eine Helix aufweist, die sich in Längsrichtung entlang mindestens einem Abschnitt des Kerns erstreckt.

4. Verbindungsverfahren, aufweisend das Verbinden des Klebeartikels nach einem der Ansprüche 1 bis 3 mit mindestens einem ersten und mindestens einem zweiten Substrat derart, dass das erste und zweite Substrat miteinander verbunden werden.

5. Verfahren nach Anspruch 4, wobei das erste und zweite Substrat zwischen sich einen Spalt von zwischen 0,2 mm und 20 mm definieren und wobei der Klebeartikel den Spalt füllt.

6. Verfahren zum Erhöhen der Steifheit eines Substrats, aufweisend das Verbinden des Klebeartikels nach einem der Ansprüche 1 bis 3 mit dem Substrat.

7. Verwendung eines Klebeartikels nach einem der Ansprüche 1 bis 3 zum Verbinden oder Versteifen von Komponenten in einem Transportvehikel.

## Revendications

1. Article adhésif comprenant une âme allongée comprenant une nappe fibreuse non tissée, ladite âme étant pourvue d'une gaine comprenant une composition adhésive comprenant un adhésif activable, dans lequel le plus petit diamètre de l'âme est de 6 mm ou plus et dans lequel l'article adhésif est compressible de manière réversible dans au moins une direction perpendiculaire à l'axe longitudinal, dans une mesure d'au moins 30 %, et de telle sorte que, quand la charge comprimant l'article adhésif cesse d'être appliquée, l'article retourne à au moins 90 % de sa dimension originale.

2. Article adhésif selon la revendication 1, dans lequel la gaine s'étend de manière discontinue le long de la surface de l'âme.

3. Article adhésif selon la revendication 1, dans lequel la gaine comprend au moins une hélice qui s'étend dans une direction longitudinale le long d'au moins une partie de l'âme.

4. Procédé de collage comprenant le collage de l'article adhésif tel que défini dans l'une quelconque des revendications 1 à 3 sur au moins un premier substrat et au moins un deuxième substrat de manière à coller lesdits premier substrat et deuxième substrat l'un sur l'autre.

5. Procédé selon la revendication 4, dans lequel lesdits premier substrat et deuxième substrat définissent entre eux un intervalle de 0,2 mm à 20 mm et dans lequel ledit article adhésif remplit ledit intervalle.

6. Procédé d'augmentation de la rigidité d'un substrat, comprenant le collage de l'article adhésif tel que défini dans l'une quelconque des revendications 1 à 3 sur le substrat.

7. Utilisation d'un article adhésif selon l'une quelconque des revendications 1 à 3 pour coller ou rigidifier des composants dans un véhicule de transport.
